# EUROPEAN PATENT SPECIFICATION

(11) **EP 3 820 825 B1**
(45) Date of publication and mention of the grant of the patent: **10.04.2024**
(21) Application number: 19749450.3
(22) Date of filing: 12.07.2019
(51) Int. Cl.: C02F 11/127, C02F 11/147

(54) **METHOD FOR DEWATERING WATERY BIOMASS**
VERFAHREN ZUR ENTWÄSSERUNG VON WÄSSRIGER BIOMASSE
PROCÉDÉ DE DÉSHYDRATATION DE BIOMASSES AQUEUSES

(30) Priority: 13.07.2018 NL 2021302
(43) Date of publication of application: 19.05.2021
(73) Proprietor: HaskoningDHV Nederland B.V., 3818 EX Amersfoort (NL)
(72) Inventor: KOORNNEEF, Eddie, 3818 EX Amersfoort (NL); VAN SCHAGEN, Kim Michael, 3818 EX Amersfoort (NL)
(74) Representative: Nederlandsch Octrooibureau
(86) International application number: PCT/NL2019/050440
(87) International publication number: WO 2020/013698

(56) References cited:
- WO-A1-98/18730
- CN-A- 107 908 111
- GB-A- 2 113 563
- US-A- 4 576 723
- US-A- 5 626 766
- US-A1- 2017 341 958

## Description

### Field of the invention

The present invention concerns an improved method for dewatering watery biomass, such as sludge. This is particularly relevant for the field of wastewater treatment.

### Background art

Processes that concern waste streams comprising organic components often produce watery biomass, such as sludge or manure, as waste stream. For these processes biomass dewatering, especially sludge dewatering, is an essential step as it is too expensive to dispose of sludge in diluted form. For these waste stream processes watery biomass dewatering is a critical step, since the aqueous effluent that is separated from the watery biomass (also called centrate in case of a centrifuge or filtrate in case of a thickener) is often fed back to the initial waste stream. In case aqueous effluent dry matter is too high, the waste water treatment process is more heavily burdened as more dry matter is reprocessed; moreover it may also lead to failure of the waste water treatment process which brings high costs and downtime. Similarly, if the dry matter of the dewatered biomass is not within specifications, extra transportation and processing costs are involved in further processing of the dewatered biomass. Additionally, the watery biomass dewatering process itself is expensive as maintenance and personnel costs are considerable and expensive chemicals (polyelectrolytes) are needed for processing.

Watery biomass dewatering is done with a dewatering apparatus. Considering the importance of watery biomass dewatering, process control of the watery biomass dewatering apparatus is of great importance. Process control is impeded by the variation in incoming watery biomass. Often the waste stream is far from constant in composition, quality and quantity over time and therefore the incoming watery biomass is far from constant in composition, quality and flux. Also, if watery biomass from more than 1 installation is dewatered by one dewatering apparatus (which is common practice), the composition, quality and quantity of incoming watery biomass inevitably varies depending on the source of the watery biomass that is processed or the ratio in which the different batches of watery biomass from different sources are mixed fed. Moreover, process settings for the upstream process which produces the watery biomass as waste stream, such as for example the wastewater treatment process, have also considerable impact on the composition, quality and quantity of incoming watery biomass. For all these situations the variation is especially troublesome since the aptitude for dewatering of the incoming watery biomass also varies considerably and this aptitude cannot be measured. Watery biomass can vary enormously in terms of physical, chemical and biological characteristics, leading to its relatively unpredictable behaviour, especially dewatering behaviour. Several watery biomass properties are known to relate to dewatering aptitude such as pH, particle surface charge, organic content, cake porosity, compressibility, particle size and morphology, rheological characteristics, bound water content and solid concentration. However these properties do not have the predictive power towards dewatering aptitude needed for effectively controlling dewatering processes. Moreover, no successful predictive model for dewatering aptitude based on a combination of these properties has emerged. Additionally, the multitude of parameters that play a role in the dewatering of watery biomass leads the complex and sub-optimal control of the dewatering process.

Therefore, strategies to overcome this variation and unknown watery biomass dewatering aptitude of the incoming watery biomass include tight monitoring of the process through operator involvement, specific control strategies and/or large (mixed) sludge buffers. The control strategies makes use of measuring specific parameters. Based on these measured parameters the watery biomass dewatering apparatus is controlled. Most control systems use the dry matter and flux of the incoming watery biomass to determine the control parameter settings. Often the used dry matter content is a preset number by the operator, because of the inaccuracy of the online measurement. Sometimes the dry matter content of the aqueous effluent is also measured online, for example through an optical turbidity meter or a multi-beam infrared turbidity meter. However these types of measurements are notoriously inaccurate, because the measuring instruments have a tendency for fouling, and also air bubbles in the aqueous effluent disturb the measurement.

Therefore, in practice when operating the dewatering apparatus, this aqueous effluent measurement is considered indicative, and the control parameter settings are based on the dry matter and flux of the incoming watery biomass. These control parameters settings based on incoming watery biomass may be selected by the operator or may be based on calculations of the control software of the dewatering apparatus. In general, the control parameter settings are chosen conservatively meaning that a higher dosing of polyelectrolytes and/or a lower pressure on the sludge, is selected then strictly necessary for obtaining the best values for dewatered biomass and aqueous effluent. Obviously, this conservative approach is more expensive than a more progressive approach. The conservative approach is preferred due to the unknown watery biomass dewatering aptitude; with a same dry matter content and same process parameter settings a different dewatering result may be obtained and there is no way to tell beforehand which dewatering result will be obtained. Moreover the conservative approach is also preferred to anticipate (sudden) changes in watery biomass composition, watery biomass dewatering aptitude and flux which regularly occur. In general control systems react slowly towards such changes and are poor in handling step changes. Often it takes several hours for the system to adapt to the new situation and come to new optimal process settings. Again a conservative approach is less efficient.

Next to this, the online dry matter measurement in the aqueous effluent often suffers from inaccuracies, in view of the high turbidity of the aqueous effluent and the state of high agitation, just downstream of the dewatering apparatus. Hence, reliably on-line monitoring is challenging and less conservative control strategies based on output parameters such as aqueous effluent dry matter are risky if not impossible. Only by a tight monitoring of the process through an operator less conservative control parameter settings are possible. Tight monitoring is time consuming and therefore expensive. Moreover waste stream processes operate in the evening, at night and during weekends and are not fully staffed at those periods. More conservative and less economical process parameter settings are chosen for those periods.

Automated control process are disclosed in WO 98/18730 A1, US 2017/341958 A1 and US 5,626,766. These documents disclose a control process wherein the electrolyte addition is controlled by determining sludge particle structure, total suspended solids or cake height on a gravity belt thickener. Such PE dosing controls have no effect on the parameters at which the dewatering device is operated. Additionally, these control process do not include an adaptive system wherein the results of the dewatering of previous batches of biomass is taken into account when controlling the present batch of biomass being dewatered. GB2113563 describes a method for dewatering sludge wherein the dewatering apparatus is operated with control parameters selected based on a comparison of feed characteristics with the characteristics of previous feeds. The control parameters include the amount of polyelectrolyte added to the sludge during the dewatering. US4576723 describes a method for rapid *in situ* estimation of the degree of dispersion in flowing two-phase systems, in particular for determining the optimum metering of dispersants or flocculants in concentrated dispersions. CN107908111 describes a computerized control method of a sludge dewatering system wherein the dewatering apparatus operates with control parameter settings which are selected based on a comparison of feed characteristics with the characteristics of previous feeds. The present invention provides in the need for a process to control the parameters of the dewatering device, which is capable of learning from the dewatering results of previous batches, and which cost-effectively provides optimal dewatering results.

### Summary of the invention

The invention provides an improved method for watery biomass dewatering with a dewatering apparatus according to claim 1. The inventors surprisingly found that the method for dewatering can significantly be improved by using a comparison between the feed characteristics of the incoming biomass with the feed characteristics of previous batches of incoming sludge, preferably combined with the dry matter and water balances over the dewatering apparatus, to select the control parameter settings for the dewatering apparatus.

Through this method, step changes in incoming biomass composition, quality and/or quantity can be anticipated and the optimal control parameters settings can be applied directly at the moment the feed characteristics change, for example at the moment a new batch of watery biomass is added to the buffer tank. By tailoring the control parameter setting according to the invention the process will be operated in a more economical way as the optimal control parameter settings will directly apply instead of a slow and sub-optimal adaptation of the control parameter settings towards the new situation. Moreover the dewatering process no longer needs to be robust to an extent that it can absorb sudden step changes in incoming sludge composition, quality and/or quantity without producing off-spec aqueous effluent or concentrated sludge. These step changes are now monitored and used for applying the control parameter settings. Therefore the steady state control parameter settings can be chosen more sharply such that the actual aqueous effluent quality and actual dry matter content of the concentrated sludge is closer to the specified aqueous effluent quality and specified dry matter content of the dewatered biomass. The safety margin therefore can be reduced. In general more sharp control parameter settings are more economical control parameters settings. The innovative method also enables to operate the dewatering process semi-automated wherein the operator only monitors the process but does not intervene, except for calamities as malfunctions. This semi-automated mode of operation saves considerable operator time and polyelectrolyte dosing amounts and therefore costs. Even more, the innovative method also enables to operate the dewatering process fully-automated wherein no presence of an operator is needed. This semi-automated and/or fully automated is especially useful in case the process is operated outside office hours. In current practice, outside office hours the dewatering process control parameter settings are chosen such that the process can absorb even larger incoming biomass variations than during office hours without producing off-spec concentrated sludge and/or aqueous effluent. Outside office hours there often is no operator to monitor or optimize the control parameters settings.

In a specific embodiment, the inventors surprisingly found that the method for dewatering of watery biomass can even further be improved by measuring the dry matter content of the aqueous effluent, comparing this measured dry matter content with a calculated dry matter content of the aqueous effluent, and only using the measured dry matter content of the aqueous effluent for selecting the control parameters settings of the dewatering apparatus if the measured dry matter content of the aqueous effluent deviates less than 25% from the value of the of the calculated dry matter content of the aqueous effluent, wherein the calculated dry matter content is based on one or more of:
- the control parameter settings,
- the feed characteristics,
- the feed characteristics and control parameter settings of previous feeds;

The comparison of the measured and the calculated dry matter content enables to filter out flawed measurements. Conventional methods which do not contain such flaw correction bear the risk the control parameters are adjusted based on flawed data, which will result in poor dewatering results or inefficient operation of the process. The further improvement on the other hand enables process control based on an online measured output parameter, namely the dry matter content of the aqueous effluent. Process control based on an online measured output parameter is more precise since the control parameters settings can be adjusted towards actual output parameters targets, instead of extrapolated and/or estimated output parameter targets. More precise control parameter settings will lead to more optimal control parameter settings. Moreover it also contributes to the semi-automated or automated operating of the dewatering process. Such further improvement of process control by filtering flawed measurements is unprecedented in the art of wastewater treatment.

However, since in general step-changes are difficult to handle through process control wherein output parameters guide control parameter settings, leading to a considerable response time, the above specific embodiment does not pre-empt the effect of the firstly claimed method.

In a more specific embodiment, the inventors surprisingly found that the measurement of the dry matter of the aqueous effluent can be improved by measuring the aqueous effluent dry matter content in a parallel channel to the main aqueous effluent channel which may be closed and flushed. Exposure to the main stream of the aqueous effluent can as such be limited to the measurement moments only, by closing the parallel channel outside measurements, such that fouling by the solids in the aqueous effluent is minimized. By doing so, shifting of the baseline by fouling of the meter and misreadings by the presence of air bubbles can be minimized, improving the measurement accuracy.

### Detailed description of the invention

### Biomass

The process according to the invention is for dewatering watery biomass according to claim 1. In the context of the present invention, watery biomass is defined as a composition containing 0.1 - 10 wt%, preferably 0.2 - 5 wt% total solids (dry mass based on total weight), and 20 - 100 wt%, preferably 50 - 90 wt% organic matter based on dry weight. Within those boundaries, the total solids and organic matter content may vary depending on the type of biomass, the origin and the processing thereof. Herein, the type of biomass may also be referred to as the type of watery biomass. The type of biomass is selected from sludge, manure and dredging waste. Typically, the watery biomass is obtained from a waste stream in a wastewater treatment process or an animal manure handling facility. In a preferred embodiment, the type of biomass is selected from sludge and manure. Preferably, the watery biomass is selected from sludge and manure. More preferably, the watery biomass is sludge, most preferably sludge obtained from a wastewater treatment process. Obviously, due to the large variety in origin of the watery biomass there is a large variety in compositions.

In the context of this application watery biomass concerns suspensions comprising mainly organic material and minerals. The dry matter content of watery biomass can vary dependent on the origin and processing. In general, the organic material forms the majority, i.e. 20 - 100 wt%, preferably 50 - 90 wt%, of the dry matter of the watery biomass. The skilled person knows how to determine the weight of dry matter of watery biomass and the weight of organic matter of watery biomass.

Sludge is a form of watery biomass produced during treatment of industrial or municipal wastewater. This sludge is also called sewage sludge and can further be classified in industrial sewage sludge and municipal sewage sludge. In one embodiment, the watery biomass is municipal sewage sludge. Industrial waste water concerns the waste water of an industrial process including food processes. In scope of the current invention, the sludge is preferably sewage sludge.

Sewage sludge may be classified based on its origin. Typically, primary sludge is the sludge coming from a settling tank. In such a settling tank incoming waste water is received and most of the solids that have a higher density than water settle. The resulting settled sludge

(primary sludge) is removed from the settling tank. Secondary sludge is sludge coming from aerobically treated sludge streams during which microorganisms convert part of the sludge. In some case primary as well as secondary sludge is further treated, for example anaerobically digested. Although often part of the organic material is converted in these further treatments, typically the further treatments also deliver sludge streams. These sludge streams are also named secondary sludge. In one embodiment of the current invention the sludge preferably is one or more of primary sludge and secondary sludge.

Wastewater treatment processes can occur in the different locations, wherein the waste streams from these different locations are combined before or during the present method for dewatering biomass. For example, wastewater treatment plants may not have their own sludge-line, wherein sludge is dewatered and further handled, but sludge from various neighbouring facilities is combined and treated in one location in one dewatering method. Also, various types of biomass, such as sludge and manure, can be combined in such a process. Sludge originating from other wastewater treatment plants then the wastewater treatment plant in which the sludge-line with dewatering device is implemented is referred to in the field as "external sludge". In a preferred embodiment, the watery biomass contains one or more batches of external sludge, preferably at least two batches of external sludge from distinct locations.

### Dewatering

Watery biomass, such as sludge, is often concentrated for practical and/or economic reasons in a concentration step. Concentration may also be referred to as dewatering or thickening. In this process part of the water is removed from the incoming watery biomass providing concentrated biomass. The concentrated biomass or sludge may also be referred to as dewatered biomass or sludge, or thickened biomass or sludge. The skilled person understands that upon dewatering most of the solids of the biomass remains in the dewatered biomass, whilst an aqueous phase (aqueous effluent) is separated from the biomass. The aqueous effluent is also referred to as centrate or filtrate. In a preferred embodiment, the aqueous effluent is a centrate, i.e. the effluent of a centrifuge. In most cases, the aqueous effluent will comprise part of the solids of the incoming biomass and part of the dissolved matter of the incoming biomass.

The reasons for dewatering are amongst others to reduce transporting costs and/or to enable further processing, disposal and/or valorisation of the biomass. Dewatering takes place in a dewatering apparatus. In such an apparatus part of the water is removed. Dewatering apparatuses are known in the art. Typical dewatering apparatuses are centrifuges, filter presses, dewatering screws, drum thickeners or gravity belt thickeners. For the current invention, the dewatering apparatus is selected from the group comprising a centrifuge, a filter press, a drum thickener or gravity belt thickeners. More preferably, dewatering apparatus is selected from the group comprising a centrifuge, a filter press and a drum thickener. Even more preferably, the dewatering apparatus is selected from the group comprising a centrifuge, a filter press. Most preferably the dewatering apparatus is a centrifuge.

Dry matter (DM) of the dewatered biomass depends on the dry matter of the incoming biomass and the dewatering process. A higher dry matter content of the dewatered biomass is preferable, as it is more economical to transport, further processing and/or discharging such biomass. The dry matter content is expressed as % DM based on total weight of the stream. Preferably the dewatered biomass comprises at least 4% DM, more preferably at least 6% DM, even more preferably at least 15% DM, even more preferably at least, 25% DM, most preferably at least 40% DM. A too high dry matter of the dewatered biomass is in some cases, e.g. in some thickening equipment, not preferred as it affects the pumpability of the biomass and therefore the processability of the biomass. Preferably the dewatered biomass comprises at most 70% DM, more preferably at most 50% DM, even more preferably at most 40% DM, most preferably at most 30% DM. Preferably the ratio of DM% of the dewatered biomass to DM% of the incoming watery biomass is between 1.1 and 30, more preferably between 2 and 25, even more preferably between 2.5 and 15, most preferably between 3 and 10. Preferably the dry matter of the incoming watery biomass is between 0.1 % DM and 8 % DM, more preferably between 0.3 % DM and 5 % DM, even more preferably between 0.5 % DM and 4 % DM, or alternatively preferably the dry matter of the incoming watery biomass is between 0.1 % DM and 2 % DM, more preferably between 0.3 % DM and 1.5 % DM, even more preferably between 0.5 % DM and 1.2 % DM, or alternatively preferably the dry matter of the incoming watery biomass is between 0.5 % DM and 8 % DM, more preferably between 1 % DM and 5 % DM, even more preferably between 2 % DM and 4 % DM. In one embodiment, the dewatering apparatus is a centrifuge, and the dry matter of the incoming watery biomass is between 0.5 % DM and 8 % DM, more preferably between 1 % DM and 5 % DM, even more preferably between 2 % DM and 4 % DM; and/or the dry matter of the dewatered biomass is at least 15 % DM, more preferably at least 25 % DM, even more preferably at least 40 % DM. In one embodiment, the dewatering apparatus is a thickener, and the dry matter of the incoming watery biomass is between 0.1 % DM and 2 % DM, more preferably between 0.3 % DM and 1.5 % DM, even more preferably between 0.5 % DM and 1.2 % DM; and/or the dry matter of the dewatered biomass is at least 4 % DM, more preferably at least 5 % DM, even more preferably at least 6 % DM.

The separation efficiency of a dewatering process and/or apparatus is defined as the ratio of the weight percentage of dry matter in the dewatered biomass to the weight percentage of dry matter in the incoming watery biomass. The separation efficiency is expressed in percentages (ratio × 100%). Preferably the separation efficiency is at least 90%, more preferably at least 94%, even more preferably at least 95%, even more preferably at least 95%, most preferably at least 99%. A higher separation efficiency is beneficial as the aqueous effluent will comprise less dry matter and therefore needs less further processing before the water is suitable for discharging. Often the aqueous effluent is considered a wastewater stream and fed to a wastewater treatment facility, preferably the wastewater treatment facility from which the biomass, typically sewage sludge, originates. Preferably the aqueous effluent is fed to a wastewater treatment facility. For economical or technical reasons there may be limits imposed on the dry matter percentage in the aqueous effluent. Preferably the aqueous effluent comprises less than 3 % DM, more preferably less than 2%, even more preferably less than 1.5% DM, even more preferably less than 1.0% DM, most preferably less than 0.5% DM. High quality aqueous effluent has a (relative) low DM percentage, whilst an aqueous effluent with a low quality is an aqueous effluent with a (relative) high DM percentage. Aqueous effluent quality thus mainly refers to the dry matter content of the aqueous effluent.

### Polyelectrolyte

The process for dewatering according to the invention contains a step wherein polyelectrolytes are added to the incoming watery biomass. Watery biomass such as sludge comprises solid particles. In general, these particles are charged and repel each other which makes dewatering of the sludge more difficult. To overcome this repellence and to facilitate sludge dewatering, often polyelectrolytes (PE) are added prior to or during sludge dewatering. Polyelectrolytes are polymers whose repeating units bear an electrolyte group and/or site chains with electrolyte groups. There are hundreds of polyelectrolytes, typical polyelectrolytes for dewatering are cationic polyelectrolytes, but for some other biomass flows anionic or nonionic polyelectrolytes can be necessary. Also combinations of polyelectrolytes are used, e.g. a combination of a linear and cross linked polyelectrolytes. For sludge dewatering and in general for sludge processing or for wastewater processing, polyelectrolytes used in a sludge dewatering step form a considerable cost.

### Control parameters

A dewatering apparatus and/or process is operated at certain process parameters, these parameter are named operating parameters. Most of these parameters can be controlled, making them control parameters. By adjusting or setting these control parameters, the process output can be steered. Such settings are also referred to as control parameter settings. Some of these control parameters are apparatus independent, i.e. they are control parameters for any dewatering process. Other control parameters are apparatus dependent, which means these parameters apply specifically to a certain dewatering apparatus. The amount of PE added is a control parameter. For a significant extent, the amount of PE added is an apparatus independent control parameter. The amount of PE added is expressed in relation to the biomass feed and is typically expressed as weight of active PE added per dry weight of the incoming biomass (e.g. in gram active PE per kilogram DM). The term "active PE" is well-known in the art and makes the expression independent of the type of PE. This is conveniently employed in view of the large range of polyelectrolyte types supplied by the different suppliers. The amount of active PE is typically in the range of 25 - 100 % of the amount of supplied PE. The skilled person is able to determine the amount of active PE. The biomass flux, i.e. the amount of biomass fed per time unit is also a control parameter, more specifically the biomass flux is an apparatus independent control parameter. Biomass flux is expressed in volume of biomass fed per time unit or mass of biomass fed per time unit. In one embodiment, the biomass flux is the sludge flux.

Other suitable control parameters are apparatus dependent. For a centrifuge, bowl speed, differential speed and torque are typical control parameters. For a belt filter press, belt speed, pressure on the belt, cake height on the belt and cake width on the belt are typical control parameters. For a drum thickener screw speed and water height in the drum thickener are typical control parameters. For a gravity belt thickener, cake height on the belt and belt speed are typical control parameters.

Preferably the control parameters of the dewatering apparatus include at least the amount of polyelectrolyte added to the biomass, and optionally further the biomass flux and the dewatering apparatus specific control parameters. Preferably, the control parameters of the dewatering apparatus include at least one dewatering apparatus specific control parameter, more preferably at least two. By adjusting the dewatering apparatus specific control parameters and/or by adjusting the biomass flux or incoming load, the energy usage of the process can be improved. An adjustment of the amount of polyelectrolyte has no effect on energy usage, but provides a reduction in costs associated with polyelectrolyte dosing and/or a better dewatering result and therefore less sludge to be handled. Preferably the apparatus dependent control parameters include one or more of bowl speed, differential speed, torque, belt speed, pressure on the belt, cake height on the belt, cake width on the belt and pressure on the release valve, water height in the drum thickener.

When the dewatering apparatus is a centrifuge, the dewatering apparatus specific control parameters include one or more of bowl speed, differential speed and torque, and when the dewatering apparatus is a belt filter press, the dewatering apparatus specific control parameters include one or more of belt speed, pressure on the belt, cake height on the belt and cake width on the belt, and when the dewatering apparatus is a drum thickener and the dewatering apparatus specific control parameters include one or more of screw speed and water height in the drum thickener, and when the dewatering apparatus is a gravity belt thickener and the dewatering apparatus specific control parameters include one or more of cake height on the belt and belt speed. In an especially preferred embodiment, the dewatering apparatus specific control parameters include at least two, most preferably all of the here mentioned dewatering apparatus specific control parameters.

### Sludge dewatering aptitude (SDA)

The ease with which watery biomass such as sludge can be dewatered (dewaterability) depends on the biomass itself, i.e. it is a biomass-specific parameter and referred to as the biomass dewatering aptitude or sludge dewatering aptitude (SDA). Sludge quality is a different term for sludge dewatering aptitude. A problem in the art is that the SDA often is unknown before the actual dewatering of the sludge. The SDA is a resultant of the origin and processing history of the sludge and is very sensitive towards minor changes in composition and processing history. SDA may be related to the colloidal nature of the watery biomass. Moreover there are no reliable tests to measure the SDA, especially no online tests for production lines. The SDA becomes evident the moment the watery biomass is dewatered. The objective of dewatering step lies in reaching a low dry matter content in the aqueous effluent and/or a high dry matter content of the concentrated biomass in a most economical way. A most economical way involves a minimum usage of PE, a minimum energy usage for a dewatering apparatus and/or minimum operator involvement (process economics). In general, the PE usage affects the process economics the most as PE usage is the most costly factor in sludge dewatering besides the DM of the dewatered biomass in relation to final treatment and transportation costs. The skilled persons knows which process parameters for a dewatering apparatus are related to energy usage, for example rotation speed and torque both directly relate to energy usage.

For watery biomass with a relative low SDA, upon dewatering, for the same usage of PE and/or the same energy usage of the dewatering apparatus the dry matter content in the aqueous effluent will be higher and/or the dry matter content of the concentrated biomass will be lower compared to a watery biomass with a higher SDA. Or for watery biomass with a relative low SDA, upon dewatering, for the same dry matter content in the aqueous effluent and/or the same dry matter content of the concentrated biomass, the usage of PE and/or the energy usage of the dewatering apparatus is higher compared to a watery biomass with a higher SDA.

The SDA is partly dewatering apparatus dependent, in the sense that watery biomass with a relative high SDA will show relative good dewatering on all dewatering apparatuses compared to watery biomass with a low SDA on the same apparatus. However in absolute values for the same watery biomass the usage of PE and/or the energy usage of the dewatering apparatus the dry matter content in the aqueous effluent and/or the dry matter content of the concentrated biomass may differ considerably between apparatuses. The process according to the invention provides a marked improvement in process economics in all situations, both with watery biomass having high or low SDA and all types of dewatering apparatuses.

### Feed characteristics

Typically a dewatering apparatus is operated continuously and the dewatering process is a continuous process. The dewatering apparatus is fed with watery biomass, typically coming from a buffer. The buffer comprises watery biomass that may originate from one or more sources. The buffer may be fed batch-wise and/or continuous. In general the watery biomass in the buffer is homogenous, so watery biomass from different sources mix in the buffer. The buffer may comprise one batch of watery biomass, or a mixture of various batches. So, the feed of the dewatering apparatus may comprise one batch of watery biomass, or a mixture of various batches, and may also be referred to as a buffer mix. A batch of watery biomass refers to a quantity of sludge that shares common features and is produced at a specific production interval. The production interval is related to a specific begin time and end time in which the batch is produced and may be defined as the median of the start time and date of production and end time and date of production of that batch. A batch may be obtained from a batch process which produces sludge or from a continuous process which continuously produces sludge. Thus, in one embodiment, "batch of watery biomass" refers to a quantity of watery biomass is produced at a specific production interval, optionally wherein the batch of watery biomass is an interval of a continues watery biomass stream defined by a certain time interval of production. In one embodiment, the time interval is selected from within the range 30 min - 2 days. Exemplary time intervals include 1 hour (all biomass fed to the dewatering apparatus in 1 hour) or 1 day (all biomass fed to the dewatering apparatus in 1 day). The batch is the sludge produced between a starting time and date of production and an end time and date of production. The starting time and date of production and end time and date of production are selected. The general guidance for this selection is that the sludge dewatering aptitude within that batch does not vary to a large extent. The selection may be made based on experience, based on specific knowledge, based on practical consideration, randomly or for other reasons. For example the selection may relate to knowledge that the sludge dewatering aptitude over a specific time period does not vary significantly or opposite, to the knowledge that a change in process setting will affect the sludge dewatering aptitude. A practical consideration may relate to a batch of sludge that is produced in one production location and that is transported to a different location for dewatering. The load capacity of the transport truck that transports the sludge may define in such a case the production moment. For a batch process that produces sludge, demarcation of the batch often follows naturally from start of production and the end of production, so also for such a case practical reasons prevail.

The feed is characterized by one or more features, referred herein as the specific features or batch specific features or feed characteristics. For the present invention these features mainly relate to the dewatering aptitude. Preferably, the features comprise one or more of:
(i) type of biomass
(ii) production installation
(iii) production moment
(iv) method of biomass production
(v) process settings during biomass production
(vi) dosing of chemicals during biomass production
(vii) weather conditions on or prior to the production moment
(viii) dry matter content of the biomass
(ix) organic matter content of the biomass
(x) age of the biomass before start of dewatering

A feature may be quantifiable but may also be a tag. Typical tags are type of biomass, production installation, and the method of biomass production. Quantifiable features are amongst others production moment, process settings during biomass production, dosing of chemicals during biomass production, weather conditions on or prior to the production moment, dry matter content of the biomass, organic matter content of the biomass and age of the biomass before start of dewatering. Some quantifiable features may also be seen as a tag, for example the production moment bears the day of the week which can be regarded as a tag, or some process setting with a binary character (on/off) can be regarded as a tag.

The type of biomass is a tag that labels a batch of biomass. Preferred tags for type of biomass in the context the present invention include sludge, manure and dredging waste. In other words, the type of biomass is preferably selected from the group consisting of sludge, manure and dredging waste.

As in most cases, the watery biomass is produced as a side stream (waste stream) of a larger stream, it is in general considered that most sludge is produced and a production installation is used to produce the watery biomass. Therefore biomass may also be characterized by the installation it is produced at, the production installation. A production location may comprise several production installations each providing biomass. Since the manufacturing process may vary considerably between production installations the biomass properties including the dewatering aptitude may vary considerably between production installations. The production installation may also refer to the specific location where the biomass is produced, typically as waste stream, and the specific installation installed at that location. Biomass, such as sewage sludge, from a specific location may have a significantly different SDA behaviour than the same type of biomass but originating from a different location.

The production moment or the moment of production may include one or more of the following parameters: (iii-a) day of the week, (iii-b) period of the year (e.g. season, month), and (iii-c) moment of the day (e.g. morning, afternoon, evening, night). Preferably, it refers to the approximate time and day in the year the batch is produced and may be defined as the median of the start time and date of production and end time and date of production of that batch. Especially for sewage sludge, the production moment may affect sludge quality also with regards to sludge dewatering aptitude, as the sewage composition that is received by a sewage treatment facility may fluctuate considerably over time. Sewage composition is affected by amongst others the season of the year, day of the week (for example weekend day versus weekday) and time of the day (for example day versus night).

The production moment also has a length (typically expressed in hours) which is the time difference between the start time and date of production and end time and date of production for that batch. Preferably the production moment has a length between 2 and 50 hours, more preferably between 4 and 24 hours, most preferably between 5 and 15 hours. Since batches of watery biomass are typically transported by truck to the buffer, the batch size is mostly more or less constant for all batches.

Especially for sewage sludge, the weather conditions on or prior to the production moment may have a significant effect on the sludge quality. For example, in times of heavy rainfall, the incoming wastewater may contain more water and less (in)organic matter, which in turn may lead to a more diluted incoming sludge stream. But after a long dry period the first flush after heavy rainfall contains a large peak of (in)organic material what leads to a large amount of primary sludge. The weather conditions on or prior to the production moment may include one or more of the following parameters: (vii-a) amount of rainfall; (vii-b) type of rainfall (chutes, snow, hail etc.), (vii-c) outside temperature. The rainfall on or prior to the production moment can be quantified as the amount of rain that fell in the relevant area (the area in which the wastewater is collected) during a specifically defined time period before the production moment and/or during the production moment. The amount of rain may be expressed as the average of millimetres or litres per square meter that fell in the time period before the production moment and/or during the production moment. The time period prior to the production moment preferably is a period between 48 hours before the production moment and the production moment, more preferably 24 hours, most preferably 12 hours.

The method of biomass production also may affect the quality, also with regards to dewatering aptitude. The method in general concerns to the process steps or unit operations the biomass is obtained with or subjected to. For example there is a relative large variety in wastewater treatment methods, these methods in fact can be seen as different sludge production methods, each providing sludge with a different quality. Moreover wastewater treatment methods generate often more than one sludge stream as for example a primary sludge stream and a secondary sludge stream. Especially for secondary sludge streams a great variety of methods exist to which this sludge may be subjected before dewatering (a.o. different types of digestion and/or filtration treatments).

Even for one sludge production method the process settings during sludge production may vary per batch. These process setting during sludge production may affect the sludge quality, also with regards to sludge dewatering aptitude.

During sludge production, chemicals are sometimes added to the sludge or to the wastewater stream. Typical chemicals that are added are iron or aluminium salts. These chemicals may affect the sludge quality, also with regards to sludge dewatering aptitude. The dosing of chemicals during sludge production may be a tag (a specific chemical is dosed: yes or no) but may also be a quantified parameter (amount dosed).

Watery biomass, such as sludge, is often stored before dewatering. Storage inevitably takes place when the biomass is transported. In case of storage a batch of biomass has an age, the age is the time period between the production moment and the start moment of dewatering. As upon storage the suspension particles may interact, salt balances may shift and/or microbiological activity may take place, the biomass quality may be affected, also with regards to dewatering aptitude. Depending on the type of sludge storage has a positive or negative effect on the SDA. For digested sludge some storage time is needed for degassing the sludge before dewatering. For primary sludge storage is negative, because gas production and bad smell will occur.

### Optimization of sludge dewatering

In one embodiment the current invention concerns a method for dewatering watery biomass, wherein based on a comparison of the feed characteristics with past feed characteristics the control parameter settings of the dewatering apparatus for the current feed are selected. Feed characteristics are defined as properties of the feed which are known or can be determined at the moment the feed is fed to the dewatering apparatus. In the method of the present invention, at least one feed characteristic of the feed to the dewatering apparatus is determined.

Feed characteristics include at least the flux of feed, the dry matter content of the feed and optionally other physicochemical parameters of the feed, in case the feed comprises more than one batch the relative amount of the different batches of watery biomass that are present in the feed and the specific features of the batch or in case the feed comprises more than one batch the specific features of each of those batches. Preferably the buffer comprises more than one batch, so the feed preferably comprises more than one batch. The specific features of each of the one or more batches are selected from (i) - (x) as defined above.

Thus, the feed characteristic of the feed comprising one or more batched of watery biomass that is used for the comparison is selected from amongst the flux, the dry matter content of the feed, the relative amounts of the one or more batches of watery biomass and the specific features of each of the one or more batches of watery biomass selected from (i) type of biomass, (ii) production installation, (iii) production moment, (iv) method of biomass production, (v) process settings during biomass production, (vi) dosing of chemicals during biomass production, (vii) weather conditions on or prior to the production moment, (viii) dry matter content of the batch, (ix) organic matter content of the batch, and (x) age of the batch before start of the dewatering. Preferably two or more, more preferably three or more, even more preferably four or more, most preferably five or more of these feed characteristics are determined and used for the comparison.

The feed characteristics include at least the flux and the dry matter content of the feed. The load (or "total mass") of a stream, e.g. the feed, can be determined by multiplying the flux of the stream with the dry matter content of the stream. As such, in a preferred embodiment, the process according to the invention involves determining the load of the feed and using that as feed characteristic for the comparison. In a further preferred embodiment, the process according to the invention further involves determining the load of at least one of the dewatered biomass and the aqueous effluent, preferably at least of the aqueous effluent. In case the load of the feed and one of the dewatered biomass and the aqueous effluent is known, the load of the other one of the dewatered biomass and the aqueous effluent can be calculated. As a general principle, the load of the (combined) incoming stream(s) should equal the load of the (combined) outgoing steam(s).

Thus, in an especially preferred embodiment, the load of the feed and the load of at least one of the dewatered biomass and the aqueous effluent is determined and both are used as feed characteristic for the comparison. As such, optimal loads of the outgoing streams, the dewatered biomass and the aqueous effluent, can be achieved by the dewatering process of the present invention. In other words, the watery biomass is most optimally dewatered using the process according to the invention.

The feed characteristics together with the process parameter settings and flux and dry matter levels of the aqueous effluent and concentrated biomass are preferably stored in a database. The database may be in the form of a block chain type of database. The frequency of storing preferably is one storage moment per time unit, wherein the time unit is between 1 second and 120 minutes, more preferably between 1 minutes and 60 minutes, most preferably between 2 minutes and 20 minutes.

Preferably for an incoming feed, a comparison between the feed characteristics of the watery biomass with the feed characteristics of previously dewatered feeds is made. Preferably, based on this comparison one or more previously dewatered feeds with similar characteristics are selected and the feed characteristics, the control parameter settings and the resulting dry matter content of these feeds with similar characteristics are used to select the control parameter settings for the incoming feed. These previously dewatered feeds with similar characteristics are also named similar feeds or similar previously dewatered feeds or selected previously dewatered feeds.

Preferably the control parameter settings to operate the dewatering apparatus are selected at the moment a change in composition of the feed that is fed to the dewatering apparatus occurs, Compared to conventional process control, in which only after a change in feed composition the control parameter settings are adjusted, the current improved process provides a more efficient process control (at all times the most optimal control parameters are selected), moreover it avoids off-spec end products due to a sudden change in feed composition.

Preferably the similar feeds are selected by applying specific selection criteria. Specific selection criteria may be based on knowledge on the size of the effect on the SDA of each feed characteristic. Preferably the selection criteria are one or more of an importance factor of each characteristic in relation to the other characteristics; inclusion conditions for one or more characteristics; exclusion conditions for one or more characteristics. The importance factor represents the importance of each characteristic in relation to other characteristics. This factor is between 0 (no importance so the characteristic is not taken into account for the selection) and 1 (the characteristic is the only factor that is taken into account). An inclusion conditions is a condition with which the feed characteristic has to comply. If the condition is not complied with, the specific feed will not be selected as similar feed. The inclusion condition may for example be a numerical range within which the characteristic has to fall; however the inclusion condition may also be a tag which needs to be the same as the inclusion condition tag. The inclusion conditions are based general rules which are applied on the feed characteristics of the incoming feed. For examples, if an incoming feed comprises 50% of a batch coming from production location A, an inclusion condition may be that similar feeds need to comprise between 40% (50% - 10%) and 60% (50% + 10%) of a batch coming from production location A, wherein the plus and minus 10% is a general rule that is applied for the specific situation.

Preferably one or more of the feed characteristics, the control parameter settings and the resulting dry matter content of the selected one or more previously dewatered feeds are used to select the control parameter settings for the incoming feed. In one embodiment, the control parameter settings are selected through
(a) comparing the feed characteristics to a database comprising feed characteristics or previously dewatered feeds, the control parameter settings that were used for dewatering these feed compositions and the resulting dry matter content of the dewatered biomass and the aqueous effluent,
(b) selecting one or more previously dewatered feeds from the database having similar characteristics to the feed characteristics ; and
(c) selecting the control parameter settings for the dewatering apparatus based on or more of the feed characteristics, the control parameter settings and the resulting dry matter content of the selected one or more previously dewatered feeds.

Preferably, control parameter settings are selected that will reach a target dry matter content in the aqueous effluent and/or the concentrated sludge in a most economical way. A most economical way comprise a minimum usage of PE and a minimum energy usage for a dewatering apparatus. The skilled person knows several ways to come to the selected control parameters that dewater in a most economical way; for example the skilled person may average the control parameter settings of the selected feeds, but the skilled person may also use these averaged settings as a starting point and optimize them towards the target aqueous effluent and/or concentrated biomass dry matter levels, moreover for this optimization the skilled person may take the obtained dry matter levels of the similar feeds into account. Preferably the control parameter settings are selected by averaging the control parameter settings of the one or more similar feed compositions and using these averaged control parameter settings as the selected control parameter settings. However in another embodiment preferably the control parameter settings are selected by averaging the control parameter settings of the one or more similar feed compositions and using them as a starting point for optimizing the selected control parameter settings, preferably the dry matter levels of the feed, the aqueous effluent and/or concentrated biomass of the one or more similar feed compositions and the incoming feed are taken into account for the optimization.

In another preferred embodiment a model is used to select the optimal control parameters, which makes use of one or more of incoming and obtained dry matter contents in the aqueous effluent and concentrated biomass of the selected one or more previously dewatered feeds, incoming and target dry matter contents in the aqueous effluent and concentrated biomass for the incoming feed and the effect of the control parameters on the dry matters. Preferably, the selection is performed as follows:
(a) comparing the feed characteristics to a database comprising feed characteristics or previously dewatered feeds, the control parameter settings that were used for dewatering these feed compositions and the resulting dry matter content of the dewatered biomass and the aqueous effluent,
(b) selecting one or more previously dewatered feeds from the database having similar characteristics to the feed characteristics ; and
(c) selecting the control parameter settings for the dewatering apparatus based on or more of the feed characteristics, the control parameter settings and the resulting dry matter content of the selected one or more previously dewatered feeds,
   wherein the control parameter settings are selected by
(d) averaging the control parameter settings of the one or more similar feed compositions,
(e) comparing the desired dry matter content to the actually obtained dry matter content of the similar feeds, wherein the dry matter content is one or more of the dry matter content of the incoming watery biomass, the dry matter content of the aqueous effluent, and the dry matter content of the dewatered biomass; and
(f) adapting the averaged control parameters to come to the selected control parameters based on the deviation from the desired dry matter content from the actually obtained dry matter content.

The method for dewatering watery biomass, wherein a feed comprising one or more batches of watery biomass is fed to a dewatering apparatus, to obtain dewatered biomass and an aqueous effluent, wherein the dewatering apparatus operates with control parameter settings which are selected based on a comparison of feed characteristics with the characteristics of previous feeds, preferably is performed on a regular basis during dewatering watery biomass, preferably in a frequency of 1 per 12 hour, more preferably 1 per 6 hours, even more preferably 1 per 2 hours, most preferably 1 per 1 hour. In another embodiment the method for dewatering biomass is preferably performed at or around the moment an incident occurs. An incident is a change in the dewatering process that affects the dewatering process. At or around in this context is preferably within 1 hour before or after the incident occurs, more preferably within 30 minutes, even more preferably within 10 minutes, most preferably within 1 minute. Typical incidents are amongst others a change in the feed characteristics for example the introduction of a new batch of watery biomass to the feed, a change in the feed flux, a different setpoint for dry matter in the aqueous effluent and/or concentrated biomass and the start-up of the dewatering apparatus. Preferably the method for dewatering biomass is performed both on a regular basis and at or around the moment an incident occurs.

### Measurement of effluent quality

In a dewatering process, a specific effluent quality and dry matter content of the dewatered biomass are targeted. Therefore preferably both parameters are continuously measured online for process monitoring or even for automated process control. A common way of measuring effluent quality is through an optical turbidity meter or a multi-beam infrared turbidity measurement. However these measurements are notoriously unreliable, because the measuring instruments have a tendency for fouling, moreover also air bubbles in the aqueous effluent disturb the measurements. Fouling is related to remaining particles and the oxygenic environment comprising water, oxygen and organic material. Reliable automated process control based on online effluent quality measurement is therefore considered not possible, even though such process control would deliver considerable benefits in process efficiency/economics.

Surprisingly the inventors now found a method to improve the measurement quality to such an extent that enables automated process control based on the online measurement of aqueous effluent quality. Such a measurement improves the process control for watery biomass dewatering, as the measured aqueous effluent quality can be compared to the targeted effluent quality and in case of deviations this information can directly be used to steer the process either by an operator or by automated process control. Although such measurement cannot anticipate step changes in watery biomass quality and/or other watery biomass parameters, in steady state situations and/or when the watery biomass quality and/or other watery biomass parameters change relatively slowly, dewatering of watery biomass can be performed more efficiently. For example the energy input and/or polyelectrolyte usage may be minimized, moreover less conservative control parameters may be selected, also operator involvement may be minimized.

Online measurement in the context of measurement of product streams during dewatering of watery biomass has the meaning that a parameter of the product stream is directly measured in the product stream. This in contrast to offline measurement of product stream parameters for which a sample from the product stream is removed and subsequently measured. Typically for an online measurement the outcome of the measurement is known within several minutes. Measurements in a channel that is placed in parallel with the main product stream and is connected to the main stream is also considered an online measurement, even when product stream in the parallel channel is not re-joined with the main product stream.

In an embodiment of the invention the control parameter setting are adapted as follows:
(a) repeatedly, during dewatering, the dry matter content of the aqueous effluent is measured;
(b) for every occurrence of steps (a) an expected dry matter content of the aqueous effluent is calculated, based on one or more of
   - the control parameter settings,
   - the feed characteristics,
   - the feed characteristics, control parameter settings and/or resulting dry matter of the aqueous effluent of previous feeds;
   wherein in case the value of the measured dry matter content of the aqueous effluent in step (a) deviates more than 25 %, preferably more than 10 %, most preferably more than 5 % from the value of the of the expected dry matter content of the aqueous effluent calculated in step (b), one or more of the following is performed:
   (i) the measured dry matter content is preferably discarded and not used to control the dewatering device;
   (ii) the measurement of step (a) is done again, preferably in combination with discarding of the measured dry matter content as in (i); and
   (iii) the turbidity measurement device is flushed with clean water, preferably in combination with redoing the measurement as in (ii) and discarding of the measured dry matter content as in (i).

Preferably, in case of an off-measurement at least (i) is performed, more preferably at least (ii) in combination with (i). In an especially preferred embodiment, the turbidity measurement device as defined below is used, and in case of an off-measurement all of (i), (ii) and (iii) are performed.

The redoing of the measurement according to (ii) is preferably performed as follows:
(1) when the value of the measured dry matter content of the aqueous effluent in step (a) deviates more than 25 %, preferably more than 10 %, most preferably more than 5 % from the value of the of the expected dry matter content of the aqueous effluent calculated in step (b), step (a) and (b) are repeated, preferably by shortening the time interval between steps (a) and (b) by at least 10 %, and the previous measured dry matter content is preferably discarded and not used to control the dewatering device;
(2) when the value of the measured dry matter content of the aqueous effluent in step (b) deviates less than 25 %, preferably less than 10 %, most preferably less than 5 % from the value of the of the expected dry matter content of the aqueous effluent calculated in step (b), the dry matter content of the aqueous effluent and/or dewatered sludge measured in step (a) is used to adapt the control parameter settings, and/or the time interval between two measurements of the dry matter content of the aqueous effluent in step (b) is increased by at least 10 %.

Preferably the expected dry matter content of the aqueous effluent is calculated as follows:
(a) comparing the feed characteristics to a database comprising feed characteristics or previously dewatered feeds, the control parameter settings that were used for dewatering these feed compositions and the resulting dry matter content of the dewatered biomass and the aqueous effluent,
(b) selecting one or more previously dewatered feeds from the database having similar characteristics to the feed characteristics ; and
(c) calculating the expected dry matter content of the aqueous effluent based on one or more of the feed characteristics, the control parameter settings and the resulting dry matter content of the aqueous effluent of the selected one or more previously dewatered feeds and/or the feed characteristics and/or the control parameter settings of the feed.

Preferably in step (c) the expected dry matter content is taken as the average of the resulting dry matter contents of the aqueous effluent of the selected feeds.

This method provides an improved accuracy and/or reliability of the measured aqueous effluent quality compared to conventional methods, and therewith provides the benefits for watery biomass dewatering as described hereinabove, related to online measurement of aqueous effluent quality. By comparing the measured aqueous effluent quality with a predicted aqueous effluent quality the quality of the measurement value can be assessed, providing an improved reliability as poor measurements may be discarded. Especially since historic data is used to validate the measured value, measurement errors can be reliably determined and discarded. As such, the process according to the invention is highly reliable and self-learning, such that operator input can be minimized without jeopardizing or even with improving the quality of the dewatering process. Such a self-learning control mechanism that provides optimal dewatering conditions with minimal operator input is unprecedented in the art.

The aqueous effluent quality is measured with a turbidity measurement device, which is placed in a measuring channel positioned parallel to the main aqueous effluent channel and the inlet and outlet of the measurement channel are connected to the main aqueous effluent channel. By measuring in a parallel channel the risk of fouling is diminished. The measuring channel is preferably provided with one or more valves, preferably with a valve at the inlet and a valve at the outlet, to close the channel during the time intervals between two measurements of step (b); and/or wherein the parallel channel can be flushed with clean water, preferably wherein the parallel channel is flushed with clean water before a measurement. By closing the channel between measurements fouling can be prevented, moreover flushing with clean water removes most or all of the remnant contamination.

The flux and dry matter content of the feed, the aqueous effluent and the dewatered biomass is measured and based on these measurements the incoming and outgoing amount of dry matter is calculated, wherein in case the incoming and outgoing amount of dry matter differ more than 25%, preferably more than 10%, most preferably more than 5% an alarm signal is prompted and/or the dewatering apparatus is stopped. By checking the difference between the incoming and outgoing amount of dry matter (checking the mass balance) process disturbances can be identified promptly, preventing off-spec watery effluent and/or concentrated biomass. Preferably in case step (1) is performed more than one time, preferably more than two times, most preferably more than 4 times in a row without that step (2) is performed in between an alarm signal is prompted and/or the dewatering apparatus is stopped. In this way process disturbances or measurements errors can be identified promptly, preventing off-spec watery effluent and/or concentrated biomass. Especially since cleaning of the dry matter measurement device is not always successful, the alarm provides incentive to act.

### Examples

### Example 1

In an industrial scale wastewater processing facility in Almere (The Netherlands) sludge is concentrated in a sludge centrifuge. The sludge centrifuge is operated continuously, 24 hours per day, 7 days per week, except when maintenance takes place. The sludge centrifuge is provided with sludge obtained from different wastewater treatment locations, the wastewater provided and the wastewater processing in these locations vary over time; so over time different batches of sludge are fed to the sludge centrifuge. The set value for the dry matter content of the dewatered sludge is 20%, the set value for the dry matter content of the aqueous effluent is less than 2%. An operator is present to monitor the sludge centrifuge at daytime between 8:00 AM and 17:00 PM. The PE usage and dry solids of the dewatered sludge is measured over a week at regular intervals. When the operator is not present, the process is monitored and steered by automated process control. Before the operator leaves, the operator selects fixed set values for the process control parameters (amount of polyelectrolyte, feed flux, bowl speed, differential speed and torque) based on the feed flux, incoming dry matter, composition of the buffer tank and the dewatering result around the moment the operator leaves. During the whole monitoring period the dry matter of the aqueous effluent did not transcend the set value for the aqueous effluent. It was found that the dewatering result (expressed as the combined costs of polyelectrolyte consumption and DM% from centrifuge) is 10-15% better at daytime. This example shows that by close monitoring by an operator the performance of a sludge centrifuge can be improved while keeping aqueous effluent quality within specifications.

| | ***0:00-8:00*** | ***8:00-17:00** (attendance of operator)* | ***17:00-24:00*** |
|---|---|---|---|
| ***Dry solids of dewatered sludge*** | 20% | 22% | 20% |
| ***Polymer consumption (g*/*kg DM)*** | 15 | 12 | 15 |
| ***DM% in aqueous effluent*** | 2% | 0.5% | 2% |

### Example 2

For a wastewater treatment plant in Amersfoort (The Netherlands), sludge is concentrated in two sludge centrifuge. The sludge is provided from two buffer tanks. Sludge from 3 different digestion tanks is fed to the buffer tanks, moreover digested secondary sludge from a different location is fed to the buffer tanks. The sludge quality is significantly altered when sludge from the different location is provided. Sludge from the fermentation tanks is thermally disintegrated through LysoTherm° systems placed downstream from each of the digestion tanks. Om regular basis the LysoTherm^{©} units need maintenance, which alters the sludge quality that is fed to the buffer tanks/coming from the digestion tanks. The dry matter of the aqueous effluent is measured through a turbidity measurement device which is placed in a parallel channel to the main aqueous effluent channel, the parallel channel is provided with a valve at the inlet and a valve at the outlet, to close the channel during the time intervals between two measurements, moreover the parallel channel can be flushed with clean water.

An automated control system is present which steers the process control parameters, being the bowl speed, differential speed and torque of the centrifuge and the amount of PE addition. The automated control system is connected to a database, wherein historical data of previous batches are stored, including feed characteristics, applied control parameters and resulting dry matter and flux of the aqueous effluent and concentrated sludge are stored. The applied control parameters comprise bowl speed, differential speed and torque of the centrifuge and the amount of PE addition

The feed characteristics comprise:
- Relative amount of the batches present in the buffer tank
- Specific features of the batches present, including:
   ∘ The specific digestion tank wherein the batch was produced
   ∘ The status of the LysoTherm^{©} connected to the digestion tank
   ∘ The production location
- Dry matter content of the sludge in the buffer
- Dry matter content of the sludge within the centrifuge
- Feed flux

The automated control system compares the feed characteristics of the incoming feed with the feed characteristics of previous feeds and selects similar feeds. The applied control parameters and resulting dry matter of the aqueous effluent and concentrated sludge of the similar batches are then used to select the optimal process control parameters. The process control parameters torque, differential speed, feed flux and amount of PE addition are based on this comparison with the previous similar feeds. Fine-tuning, adaptation to minor changes of the incoming batch and optimizing of the process control parameters by the automated control system are based on aqueous effluent quality measurements. The aqueous effluent quality is measured every 1 - 10 minutes. At the start of every measurement the valves of the parallel channel are opened and the dry matter level is measured. The measured dry matter level is compared with a calculated dry matter level. In case the measured value differs more than a predetermined percentage from the calculated value the measurement is discarded, the valves of the parallel channel are closed and the parallel channel is rinsed with clean water. Subsequently, a new measurement cycle is started. If the measurement is accepted and the dry matter of the aqueous effluent is lower than the set value, the control parameters may be adapted to lower the energy input or PE usage. The calculated dry matter level of the aqueous effluent is based on a mass balance (flux and dry matter of the incoming sludge and the concentrated sludge) and the rate by which the dry matter of the aqueous effluent changed during the previous time period. As total incoming mass (= feed flux × feed dry matter) equals total outgoing mass (= [centrate flux × centrate dry matter] + [concentrated sludge flux × concentrated sludge dry matter] ). Optimal centrate dry matter can be obtained, since feed flux, feed dry matter and centrate flux are reliably measured, and concentrated sludge flux and concentrated sludge dry matter are estimated based on the operational status of the LysoTherm, the specific combination of sludge batches present in the feed and historical data from the database.

The aqueous effluent is fed back to the incoming waste water. To prevent too much recirculation and disturbance of the waste water process the centrifuge is stopped when the measured aqueous effluent dry matter level is higher than the set value. The effect of the automated control system including the parallel aqueous effluent measurement is tested by alternating during prolonged periods between the innovative control system and the conventional control system. The effect on energy usage and PE usage is tested.

## Claims

1. A method for dewatering watery biomass, wherein a feed comprising one or more batches of watery biomass is fed to a dewatering apparatus, to obtain dewatered biomass and an aqueous effluent, wherein the dewatering apparatus operates with control parameter settings which are selected based on a comparison of feed characteristics with the characteristics of previous feeds and online measurement of dry matter content of the aqueous effluent wherein the dry matter is measured with a turbidity measurement device, which is placed in a measuring channel positioned parallel to the main aqueous effluent channel and the inlet and outlet of the measurement channel are connected to the main aqueous effluent channel
wherein
(a) repeatedly during dewatering, dry matter content of the aqueous effluent is measured;
(b) for every occurrence of steps (a) an expected dry matter content of the aqueous effluent is calculated, based on one or more selected from the feed characteristics, control parameter settings and/or resulting dry matter of the aqueous effluent of previous feeds;
wherein in case the value of the measured dry matter content of the aqueous effluent in step (a) deviates more than 25% from the value of the expected dry matter content of the aqueous effluent calculated in step (b) one or more of the following is performed:
(i) the measured dry matter content is discarded and not used to control the dewatering device;
(ii)The measurement of step (a) is done again in combination with discarding of the measured dry matter content as in (i); and
(iii) the turbidity measurement device is flushed with clean water, in combination with redoing the measurement as in (ii) and discarding of the measured dry matter content as in (i)
wherein a self-learning control mechanism is used by using historic data to validate the measured aqueous effluent quality and determining and discarding measurement errors, and wherein the aqueous effluent quality refers to the dry matter content of the aqueous effluent,
wherein the dewatering device is selected from a centrifuge, a belt filter press, a drum thickener and a gravity belt thickener,
wherein the control parameters of the dewatering apparatus include at least the amount of polyelectrolyte added to the biomass prior to or during the dewatering and a dewatering apparatus specific control parameters, wherein the dewatering apparatus specific control parameters are selected as follows:
- when the sludge dewatering apparatus is a centrifuge, the dewatering apparatus specific control parameters include one or more of bowl speed, differential speed and torque;
- when the sludge dewatering apparatus is a belt filter press, the dewatering apparatus specific control parameters include one or more of belt speed, pressure on the belt, cake height on the belt and cake width on the belt;
- when the sludge dewatering apparatus is a drum thickener, the dewatering apparatus specific control parameters include one or more of screw speed and water height in the drum thickener; and
- when the sludge dewatering apparatus is a gravity belt thickener, the dewatering apparatus specific control parameters include one or more of cake height on the belt and belt speed,
wherein the feed characteristics include at least the flux and the dry matter content of the feed,
and wherein the type of biomass is selected from manure, sludge, dredging waste and mixtures thereof.

2. The method according to claim 1, wherein the watery biomass is sludge originating from a wastewater treatment plant.

3. The method according to any one of the preceding claims, wherein the feed contains a mixture of at least two batches from distinct production locations, and the specific features include at least (ii).

4. The method according to any of the preceding claims, wherein the dewatering apparatus is a centrifuge.

5. The method according to any of the preceding claims, wherein a batch of watery biomass refers to a quantity of sludge that shares common features and is produced at a specific production interval, optionally wherein the batch of sludge is an interval of a continues stream defined by a certain time interval of production or a certain volume.

6. Method according to any of the preceding claims wherein the control parameter settings are selected through
(a) comparing the feed characteristics to a database comprising feed characteristics or previously dewatered feeds, the control parameter settings that were used for dewatering these feed compositions and the resulting dry matter content of the dewatered biomass and the aqueous effluent,
(b) selecting one or more previously dewatered feeds from the database having similar characteristics to the feed characteristics; and
(c) selecting the control parameter settings for the dewatering apparatus based on one or more of the feed characteristics, the control parameter settings and the resulting dry matter content of the dewatered biomass and the aqueous effluent of the selected one or more previously dewatered feeds and/or the feed.

7. Method according to claim 6, wherein the selection criteria for step (a) include one or more of:
(i) an importance factor of each characteristic in relation to the other characteristics;
(ii) inclusion conditions for one or more characteristics;
(iii) exclusion conditions for one or more characteristic.

8. Method according to claim 6 or 7, wherein the selecting of step (c) includes
(d) averaging the control parameter settings of the one or more similar feed compositions.

9. Method according to any of the preceding claims wherein the method is performed at the moment an incident occurs.

10. Method according to claim 1, wherein the redoing of the measurement according to (ii) is performed as follows:
(1) when the value of the measured dry matter content of the aqueous effluent in step (a) deviates more than 25%, preferably more than 10%, most preferably 5% from the value of the of the expected dry matter content of the aqueous effluent calculated in step (b)
- step (a) and (b) are repeated;
(2) when the value of the measured dry matter content of the aqueous effluent in step (b) deviates less than 25%, preferably less than 10%, most preferably less than 5% from the value of the of the expected dry matter content of the aqueous effluent calculated in step (b)
- the dry matter content of the aqueous effluent and/or dewatered sludge measured in step (a) is used to adapt the control parameter settings, and/or
- the time interval between two measurements of the dry matter content of the aqueous effluent in step (b) is increased by at least 10 %.

11. Method according to any of the preceding claims, wherein time interval between two consecutive occurrences of step (b) is in the range of 0.1 - 60 minutes, preferably 1 - 15 minutes, most preferably between 2- 7 minutes.

12. Method according to any one of the preceding claims, wherein the flux and dry matter content of the feed, the aqueous effluent and the dewatered biomass is measured and based on these measurements the incoming and outgoing amount of dry matter is calculated, wherein in case the incoming and outgoing amount of dry matter differ more than 10%, most preferably-more than 5% an alarm signal is prompted and/or the dewatering apparatus is stopped

13. Method according to any one of the preceding claims, wherein in case step (1) is performed more than one time, preferably more than two times, most preferably more than 4 times in a row without that step (2) is performed in between an alarm signal is prompted and/or the dewatering apparatus is stopped.

## Patentansprüche

1. Verfahren zum Entwässern wässriger Biomasse, wobei eine Zufuhr, die eine oder mehrere Chargen wässriger Biomasse umfasst, einer Entwässerungsvorrichtung zugeführt wird, um entwässerte Biomasse und ein wässriges Abwasser zu erhalten, wobei die Entwässerungsvorrichtung mit Steuerparametereinstellungen arbeitet, die basierend auf einem Vergleich von Zufuhreigenschaften mit den Eigenschaften früherer Zufuhren und einer Online-Messung des Trockensubstanzgehalts des wässrigen Abwassers ausgewählt werden, wobei die Trockensubstanz mit einer Trübungsmessvorrichtung gemessen wird, die in einem Messkanal angeordnet ist, der parallel zu dem Hauptkanal für wässriges Abwasser angeordnet ist, und der Einlass und Auslass des Messkanals mit dem Hauptkanal für wässriges Abwasser verbunden sind,
wobei
(a) während des Entwässerns der Trockensubstanzgehalt des wässrigen Abwassers wiederholt gemessen wird;
(b) für jedes Vorkommen der Schritte (a) ein erwarteter Trockensubstanzgehalt des wässrigen Abwassers berechnet wird, basierend auf einem oder mehreren, die aus den Zufuhreigenschaften, Steuerparametereinstellungen und/oder der resultierenden Trockensubstanz des wässrigen Abwassers früherer Zufuhren ausgewählt sind;
wobei, falls der Wert des gemessenen Trockensubstanzgehalts des wässrigen Abwassers in Schritt (a) um mehr als 25 % von dem in Schritt (b) berechneten Wert des erwarteten Trockensubstanzgehalts des wässrigen Abwassers abweicht, eines oder mehreres von Folgendem ausgeführt wird:
(i) der gemessene Trockensubstanzgehalt wird verworfen und nicht zur Steuerung der Entwässerungsvorrichtung verwendet;
(ii) die Messung von Schritt (a) wird in Kombination mit dem Verwerfen des gemessenen Trockensubstanzgehalts wie in (i) wiederholt; und
(iii) die Trübungsmessvorrichtung wird mit sauberem Wasser gespült, in Kombination mit dem Wiederholen der Messung wie in (ii) und dem Verwerfen des gemessenen Trockensubstanzgehalts wie in (i)
wobei ein selbstlernender Steuermechanismus unter Verwenden historischer Daten verwendet wird, um die gemessene Qualität des wässrigen Abwassers zu validieren und Messfehler zu bestimmen und zu verwerfen, und wobei sich die Qualität des wässrigen Abwassers auf den Trockensubstanzgehalt des wässrigen Abwassers bezieht,
wobei die Entwässerungsvorrichtung aus einer Zentrifuge, einer Bandfilterpresse, einem Trommeleindicker und einem Schwerkraftbandeindicker ausgewählt ist,
wobei die Steuerparameter der Entwässerungsvorrichtung mindestens die Menge an Polyelektrolyt, die der Biomasse vor oder während der Entwässerung hinzugefügt wird, und spezifische Steuerparameter der Entwässerungsvorrichtung enthalten, wobei die spezifischen Steuerparameter der Entwässerungsvorrichtung wie folgt ausgewählt werden:
- wenn es sich bei der Schlammentwässerungsvorrichtung um eine Zentrifuge handelt, enthalten die spezifischen Steuerparameter der Entwässerungsvorrichtung die Trommelgeschwindigkeit, die Differenzgeschwindigkeit und/oder das Drehmoment;
- wenn es sich bei der Schlammentwässerungsvorrichtung um eine Bandfilterpressse handelt, enthalten die spezifischen Steuerparameter der Entwässerungsvorrichtung die Bandgeschwindigkeit, den Druck auf das Band, die Kuchenhöhe auf dem Band und/oder die Kuchenbreite auf dem Band;
- wenn es sich bei der Schlammentwässerungsvorrichtung um einen Trommeleindicker handelt, enthalten die spezifischen Steuerparameter der Entwässerungsvorrichtung die Schneckengeschwindigkeit und/oder die Wasserhöhe in dem Trommeleindicker; und
- wenn es sich bei der Schlammentwässerungsvorrichtung um einen Schwerkraftbandeindicker handelt, enthalten die spezifischen Steuerparameter der Entwässerungsvorrichtung die Kuchenhöhe auf dem Band und/oder die Bandgeschwindigkeit,
wobei die Zufuhrmerkmale mindestens den Fluss und den Trockensubstanzgehalt der Zufuhr enthalten,
und wobei die Art der Biomasse aus Gülle, Schlamm, Baggerabfällen und Mischungen davon ausgewählt ist.

2. Verfahren nach Anspruch 1, wobei es sich bei der wässrigen Biomasse um Schlamm handelt, der aus einer Kläranlage stammt.

3. Verfahren nach einem der vorhergehenden Ansprüche, wobei die Zufuhr eine Mischung aus mindestens zwei Chargen von verschiedenen Produktionsstandorten enthält und die spezifischen Eigenschaften mindestens (ii) umfassen.

4. Verfahren nach einem der vorhergehenden Ansprüche, wobei es sich bei der Entwässerungsvorrichtung um eine Zentrifuge handelt.

5. Verfahren nach einem der vorhergehenden Ansprüche, wobei sich eine Charge der wässrigen Biomasse auf eine Schlammmenge bezieht, die gemeinsame Eigenschaften aufweist und in einem spezifischen Produktionsintervall produziert wird, wobei optional die Schlammcharge ein Intervall eines kontinuierlichen Stroms ist, das durch ein bestimmtes Produktionszeitintervall oder ein bestimmtes Volumen definiert ist.

6. Verfahren nach einem der vorhergehenden Ansprüche, wobei die Steuerparametereinstellungen durch Folgendes ausgewählt werden:
(a) Vergleichen der Zufuhreigenschaften mit einer Datenbank, die Zufuhreigenschaften oder zuvor entwässerte Zufuhren, die Steuerparametereinstellungen, die zur Entwässerung dieser Zufuhrzusammensetzungen verwendet wurden, und den resultierenden Trockensubstanzgehalt der entwässerten Biomasse und des wässrigen Abwassers umfasst,
(b) Auswählen einer oder mehrerer zuvor entwässerter Zufuhren aus der Datenbank, die ähnliche Eigenschaften wie die Zufuhreigenschaften aufweisen; und
(c) Auswählen der Steuerparametereinstellungen für die Entwässerungsvorrichtung basierend auf den Zufuhreigenschaften, der Steuerparametereinstellungen und/oder des resultierenden Trockensubstanzgehalts der entwässerten Biomasse und des wässrigen Abwassers der ausgewählten einen oder mehreren zuvor entwässerten Zufuhren und/oder der Zufuhr.

7. Verfahren nach Anspruch 6,
wobei die Auswahlkriterien für Schritt (a) eines oder mehrere von Folgenden umfassen:
(i) einen Wichtigkeitsfaktor jeder Eigenschaft in Bezug auf die anderen Eigenschaften;
(ii) Einschlussbedingungen für eine oder mehrere Eigenschaften;
(iii) Ausschlussbedingungen für eine oder mehrere Eigenschaften.

8. Verfahren nach Anspruch 6 oder 7, wobei das Auswählen von Schritt (c) Folgendes enthält:
d) die Mittelung der Steuerparametereinstellungen der einen oder mehreren ähnlichen Zufuhrzusammensetzungen.

9. Verfahren nach einem der vorhergehenden Ansprüche, wobei das Verfahren in dem Moment ausgeführt wird, in dem ein Vorfall auftritt.

10. Verfahren nach Anspruch 1,
wobei das Wiederholen der Messung gemäß (ii) wie folgt ausgeführt wird:
(1) wenn der Wert des gemessenen Trockensubstanzgehalts des wässrigen Abwassers in Schritt (a) um mehr als 25 %, vorzugsweise um mehr als 10 %, am bevorzugtesten um 5 % von dem in Schritt (b) berechneten Wert des erwarteten Trockensubstanzgehalts des wässrigen Abwassers abweicht,
- werden Schritt (a) und (b) wiederholt;
(2) wenn der Wert des gemessenen Trockensubstanzgehalts des wässrigen Abwassers in Schritt (b) um weniger als 25%, vorzugsweise um weniger als 10 %, am bevorzugtesten um weniger als 5 % von dem in Schritt (b) berechneten Wert des erwarteten Trockensubstanzgehalts des wässrigen Abwassers abweicht,
- wird der in Schritt (a) gemessene Trockensubstanzgehalt des wässrigen Abwassers und/oder des entwässerten Schlamms verwendet, um die Steuerparametereinstellungen anzupassen, und/oder
- wird das Zeitintervall zwischen zwei Messungen des Trockensubstanzgehalts des wässrigen Abwassers in Schritt (b) um mindestens 10 % verlängert.

11. Verfahren nach einem der vorhergehenden Ansprüche, wobei das Zeitintervall zwischen zwei aufeinanderfolgenden Vorkommen von Schritt (b) im Bereich von 0,1 - 60 Minuten, vorzugsweise 1 - 15 Minuten, am bevorzugtesten zwischen 2 - 7 Minuten liegt.

12. Verfahren nach einem der vorhergehenden Ansprüche, wobei der Fluss und der Trockensubstanzgehalt der Zufuhr, des wässrigen Abwassers und der entwässerten Biomasse gemessen werden und basierend auf diesen Messungen die eingehende und ausgehende Menge an Trockensubstanz berechnet wird, wobei, falls die eingehende und ausgehende Menge an Trockensubstanz um mehr als 10 %, am bevorzugtesten um mehr als 5 % abweicht, ein Alarmsignal ausgelöst wird und/oder die Entwässerungsvorrichtung gestoppt wird.

13. Verfahren nach einem der vorhergehenden Ansprüche, wobei, falls Schritt (1) mehr als einmal, vorzugsweise mehr als zweimal, am bevorzugtesten mehr als 4-mal hintereinander ausgeführt wird, ohne dass Schritt (2) dazwischen ausgeführt wird, ein Alarmsignal ausgelöst wird und/oder die Entwässerungsvorrichtung gestoppt wird.

## Revendications

1. Procédé de déshydratation de biomasse aqueuse, où une charge comprenant un ou plusieurs lots de biomasse aqueuse est introduite dans un appareil de déshydratation, pour obtenir de la biomasse déshydratée et un effluent aqueux, où l'appareil de déshydratation fonctionne avec des réglages de paramètres de contrôle qui sont sélectionnés sur la base d'une comparaison des caractéristiques de charge avec les caractéristiques des charges précédentes et une mesure en ligne de la teneur en matière sèche de l'effluent aqueux, où la matière sèche est mesurée avec un dispositif de mesure de turbidité, qui est placé dans un canal de mesure positionné parallèle au canal principal de l'effluent aqueux et l'entrée et la sortie du canal de mesure sont connectées au canal principal d'effluent aqueux
où
(a) à plusieurs reprises pendant la déshydratation, la teneur en matière sèche de l'effluent aqueux est mesurée ;
(b) pour chaque occurrence des étapes (a), une teneur en matière sèche attendue de l'effluent aqueux est calculée, sur la base d'une ou plusieurs sélectionnées parmi les caractéristiques de charge, les réglages des paramètres de contrôle et/ou la matière sèche résultante de l'effluent aqueux des charges précédentes ; où, dans le cas où la valeur de la teneur en matière sèche mesurée de l'effluent aqueux à l'étape (a) dévie de plus de 25 % de la valeur de la teneur en matière sèche attendue de l'effluent aqueux calculée à l'étape (b), un ou plusieurs des éléments suivants sont effectués :
(i) la teneur en matière sèche mesurée est éliminée et n'est pas utilisée pour contrôler le dispositif de déshydratation ;
(ii) la mesure de l'étape (a) est faite à nouveau en combinaison avec l'élimination de la teneur en matière sèche mesurée comme en (i) ; et
(iii) le dispositif de mesure de la turbidité est rincé avec de l'eau propre, en combinaison avec la répétition de la mesure comme en (ii) et l'élimination de la teneur en matière sèche mesurée comme en (i)
où un mécanisme de contrôle d'auto-apprentissage est utilisé en utilisant des données historiques pour valider la qualité de l'effluent aqueux mesurée et déterminer et éliminer les erreurs de mesure, et où la qualité de l'effluent aqueux se réfère à la teneur en matière sèche de l'effluent aqueux,
où le dispositif de déshydratation est sélectionné parmi une centrifugeuse, un filtre-presse à bande, un épaississeur à tambour et un épaississeur à bande par gravité,
où les paramètres de contrôle de l'appareil de déshydratation incluent au moins la quantité de polyélectrolyte ajoutée à la biomasse avant ou pendant la déshydratation et des paramètres de contrôle spécifiques de l'appareil de déshydratation, où les paramètres de contrôle spécifiques de l'appareil de déshydratation sont sélectionnés comme suit :
- lorsque l'appareil de déshydratation des boues est une centrifugeuse, les paramètres de contrôle spécifiques de l'appareil de déshydratation incluent un ou plusieurs parmi la vitesse de bol, la vitesse différentielle et le couple ;
- lorsque l'appareil de déshydratation des boues est un filtre-presse à bande, les paramètres de contrôle spécifiques de l'appareil de déshydratation incluent un ou plusieurs parmi la vitesse de bande, la pression sur la bande, la hauteur de gâteau sur la bande et la largeur de gâteau sur la bande ;
- lorsque l'appareil de déshydratation des boues est un épaississeur à tambour, les paramètres de contrôle spécifiques de l'appareil de déshydratation incluent un ou plusieurs parmi la vitesse de vis et la hauteur d'eau dans l'épaississeur à tambour ; et
- lorsque l'appareil de déshydratation des boues est un épaississeur à bande par gravité, les paramètres de contrôle spécifiques de l'appareil de déshydratation incluent un ou plusieurs parmi la hauteur de gâteau sur la bande et la vitesse de bande,
où les caractéristiques de charge incluent au moins le flux et la teneur en matière sèche de la charge,
et où le type de biomasse est sélectionné parmi du fumier, des boues, des déchets de dragage et des mélanges de ceux-ci.

2. Procédé selon la revendication 1, où la biomasse aqueuse est de la boue provenant d'une station d'épuration des eaux usées.

3. Procédé selon l'une quelconque des revendications précédentes, où la charge contient un mélange d'au moins deux lots issus de sites de production distincts, et les caractéristiques spécifiques incluent au moins (ii).

4. Procédé selon l'une quelconque des revendications précédentes, où l'appareil de déshydratation est une centrifugeuse.

5. Procédé selon l'une quelconque des revendications précédentes, où un lot de biomasse aqueuse se réfère à une quantité de boue qui partage des caractéristiques communes et est produite à un intervalle de production spécifique, éventuellement où le lot de boue est un intervalle d'un flux continu défini par un certain intervalle de temps de production ou un certain volume.

6. Procédé selon l'une quelconque des revendications précédentes, où les réglages des paramètres de contrôle sont sélectionnés à travers
(a) comparer les caractéristiques de charge à une base de données comprenant des caractéristiques de charge ou des charges précédemment déshydratées, les réglages des paramètres de contrôle qui ont été utilisés pour déshydrater ces compositions de charge et la teneur en matière sèche résultante de la biomasse déshydratée et de l'effluent aqueux,
(b) sélectionner une ou plusieurs charges précédemment déshydratées dans la base de données ayant des caractéristiques similaires aux caractéristiques de charge ; et
(c) sélectionner les réglages des paramètres de contrôle pour l'appareil de déshydratation sur la base d'une ou plusieurs des caractéristiques de charge, des réglages des paramètres de contrôle et de la teneur en matière sèche résultante de la biomasse déshydratée et de l'effluent aqueux de l'une ou plusieurs sélectionnées des charges précédemment déshydratées et/ou de la charge.

7. Procédé selon la revendication 6,
où les critères de sélection pour l'étape (a) incluent un ou plusieurs de :
(i) un facteur d'importance de chaque caractéristique par rapport aux autres caractéristiques ;
(ii) des conditions d'inclusion pour une ou plusieurs caractéristiques ;
(iii) des conditions d'exclusion pour une ou plusieurs caractéristiques.

8. Procédé selon la revendication 6 ou 7, où la sélection de l'étape (c) inclut
(d) faire la moyenne des réglages des paramètres de contrôle de l'une ou plusieurs des compositions de charge similaires.

9. Procédé selon l'une quelconque des revendications précédentes, où le procédé est effectué au moment où un incident se produit.

10. Procédé selon la revendication 1, où la répétition de la mesure selon (ii) est effectuée comme suit :
(1) lorsque la valeur de la teneur en matière sèche mesurée de l'effluent aqueux à l'étape (a) dévie de plus de 25%, de préférence de plus de 10%, plus préférentiellement de 5%, de la valeur de la teneur en matière sèche attendue de l'effluent aqueux calculé à l'étape (b)
- les étapes (a) et (b) sont répétées ;
(2) lorsque la valeur de la teneur en matière sèche mesurée de l'effluent aqueux à l'étape (b) dévie de moins de 25%, de préférence de moins de 10%, plus préférentiellement de moins de 5 % de la valeur de la teneur en matière sèche attendue de l'effluent aqueux calculé à l'étape (b)
- la teneur en matière sèche de l'effluent aqueux et/ou des boues déshydratées mesurées à l'étape (a) est utilisée pour adapter les réglages des paramètres de contrôle, et/ou
- l'intervalle de temps entre deux mesures de la teneur en matière sèche de l'effluent aqueux à l'étape (b) est augmenté d'au moins 10 %.

11. Procédé selon l'une quelconque des revendications précédentes, où l'intervalle de temps entre deux occurrences consécutives de l'étape (b) est dans la plage de 0,1 à 60 minutes, de préférence de 1 à 15 minutes, plus préférentiellement de 2 à 7 minutes.

12. Procédé selon l'une quelconque des revendications précédentes, où le flux et la teneur en matière sèche de la charge, de l'effluent aqueux et de la biomasse déshydratée sont mesurés et sur la base de ces mesures, la quantité de matière sèche entrante et sortante est calculée, où dans le cas où la quantité de matière sèche entrante et sortante diffère de plus de 10%, de préférence de plus de 5%, un signal d'alarme est déclenché et/ou l'appareil de déshydratation est arrêté

13. Procédé selon l'une quelconque des revendications précédentes, où dans le cas où l'étape (1) est effectuée plus d'une fois, de préférence plus de deux fois, plus préférentiellement plus de 4 fois de suite sans que l'étape (2) soit effectuée entre-temps, un signal d'alarme est déclenché et/ou l'appareil de déshydratation est arrêté.
